# EUROPEAN PATENT SPECIFICATION

(11) **EP 3 139 119 B1**
(45) Date of publication and mention of the grant of the patent: **03.10.2018**
(21) Application number: 16020179.4
(22) Date of filing: 13.05.2016
(51) Int. Cl.: F26B 3/28, F26B 19/00, F26B 21/04, F26B 21/08, F26B 21/10

(54) **METHOD FOR THE AUTOMATION OF THE OPERATION MODE OF A HYBRID SOLAR DRYER FOR PLANTS AND RESPECITIVE HYBRID SOLAR DRYER**
VERFAHREN ZUR AUTOMATISIERUNG DES BETRIEBSMODUS EINES HYBRIDEN SOLARTROCKNERS FÜR PFLANZEN UND ENTSPRECHENDER HYBRIDER SOLARTROCKNER
PROCÉDÉ D'AUTOMATISATION DU MODE DE FONCTIONNEMENT D'UN SÉCHOIR SOLAIRE HYBRIDE POUR DES PLANTES ET SÉCHOIR SOLAIRE HYBRIDE CORRESPONDANT

(30) Priority: 15.05.2015 PT 15108482
(43) Date of publication of application: 08.03.2017
(73) Proprietor: Goncalo Nuno Figueiredo Costa Martins, 1350-251 Lisboa (PT); Teixeira Simoes Soromenho, Margarida, 1495-136 Alges (PT)
(72) Inventor: Gonçalo Nuno, Figueiredo Costa Martins, 1350-251 LISBOA (PT)
(74) Representative: Pereira da Cruz, Joao

(56) References cited:
- CN-A- 101 240 976
- CN-A- 101 786 784
- CN-U- 202 281 466
- CN-U- 203 454 627
- US-A1- 2015 020 408

## Description

### Technical field of the invention

Drying is a physical process which eliminates water through evaporation, in order to improve the preservation of the product, and which allows for reducing the material deterioration rate, due to the lesser quantity of water and the subsequent stabilisation of the microbiological activity and the reversion of enzymatic and chemical reactions. It enables a year-round access to the product, to cut on the products 'weight and, consequently, to reduce freight and storage costs.

Drying consists of two distinct stages: the first - constant-rate drying - during which drying is easy as the free water evaporates and a second stage- declining rate drying - during which the connected water must be evaporated, which is more difficult to remove. (Couturier et al., 1989).

Removal of water is the basis of several processes of food preservation: drying; dehydration, and lyophilisation. Drying differs from the others because it is limited to water removal through evaporation. That is, this is a thermodynamic process through which a volatile substance (water) evaporates and leaves, in the gaseous form, the environment to which it belonged.

A successful drying depends on the equilibrium of various parameters and constraints: if, on the one hand, heat supply must be slow to ensure that the product dries from the inside to the outside, on the other hand, a quick drying permits to keep the product's active substances and avoid its deterioration; but, if the drying is too quick, the formation of a crust on products is likely to happen, due to the migration of solutes to the surface and should the temperature be too high, the product will denature and darken. Thus, during the drying process, one must dominate several key factors, such as the supplied thermal energy that heats up the product and causes water to move up to the surface and its posterior transformation into vapour; the capacity of the ambient air to absorb the water vapour freed by the product, in accordance with its relative humidity and temperature; the drying air flowrate which causes the removal of water vapour from the product's surface; and the duration of the procedure.

Water is the most significant factor for the rate of deterioration (Fellows, 1996). To know the moisture content does not suffice to foresee food stability. Some foods are unstable when exposed to low moisture contents (0.6 % for peanut oil), while others are stable when exposed to relatively high moisture contents (20% for potato starch). This is the availability of water to chemicals or to microorganisms and enzymes which determines the product's life cycle. When a product dries up, it is the moisture on the surface that evaporates. An air current allows vapour to drift. Several procedures reduce the availability of water in foods: those which remove water, physically (dehydration, evaporation and lyophilisation or concentration by freezing), and those which immobilise water in the food (by addition of common salt or sugar, or by the formation of dry ice (Fellows, 1996).

The drying rate may be increased by the rising air temperature. However, a high temperature may affect quite significantly quality features, such as the germination rate, colour, levels of vitamins and amino-acids, the reconstitution rate, and bread-making performance, etc.

The enzymatic and non-enzymatic reactions, as well as the oxidation processes, are mainly influenced by the maximum temperature of the product, by the time of exposure to this temperature and by the product's moisture content (Mühlbauer, 1988). The nutritional and organoleptic properties of a product are less affected by the use of high temperatures and shorter time periods, during the thermal processing; texture, on the contrary, is less affected when high temperatures and milder drying rates are used. (Fellows, 1996).

The amount of thermal energy needed to dry a certain product depends on many factors, such as initial moisture, final moisture, temperature, relative humidity and the airflow of the drying air. (Sodha e Chandra, 1994). The optimisation of the drying process, in terms of capacity, energetic consumption and product quality is only achieved if all drying parameters are kept under control.

Excessive drying reduces the nutritional value of the product, while an insufficient, uneven or too slow drying leads to the deterioration of the quality of the product, by the action of fungi and bacteria.

Colour, taste, aroma and texture, beside the capacity for rehydration, are also affected by drying. An excessive temperature is responsible for two reactions, with unwanted side-effects: a non-enzymatic darkening and the formation of a crust. The latter may impede the drying process from carrying on correctly. The greatest impacts on the features of quality are the maximum temperature which the product achieves, the time of exposure to this temperature, the state of ripeness and the moisture content.

### State of the art of the invention

The state of the art presents methods aiming at optimising the performance of a hybrid solar dryer, on the basis of air temperature real data. However, cases allowing for the interaction of temperature data with relative humidity are unknown.

There is no knowledge of dryers capable to include these two physical quantities- temperature and relative humidity - in an algorithm able to automatise the operation of a dryer, in a self-regulation process for maintenance or reposition of optimum drying conditions. Balance between temperature and relative humidity is what makes a high-quality drying.

Several types of dryers have been developed along the years. At the industrial level, non-renewable dryers, supplied by traditional energies (fossil fuels or electricity), have been created. Similarly, at the level of small and medium-sized farms and in developing countries, dryers supplied by solar energy have been improved. Yet if the first ones represent a high investment, with long depreciation periods and imply huge energy-related costs, the second ones are hindered by the disadvantage of solar radiation discontinuity, be it by the night hours, or by the unpredictability of weather conditions.

Solar dryers can be classified according to their types of drying (Rozis, 1995); according to the energy used (Dudez, 1996, Ekechukwu and Norton, 1997 and Imre, 1997) and in accordance with their type of operation (Sodha and Chandra, 1994; Sodha *et al.,* 1987).

Two problems related to the application of solar energy as an alternative to conventional sources of energy are flashes and low density. These factors make it more difficult to have a reliable drying system, that is, capable of operating under fairly constant temperatures. In order for the drying process to carry on all night through or over cloudy periods, thermal energy has to be stored, produced or dehumidifiers have to be incorporated.

Solar drying is still being regarded as a process associated with developing countries' agriculture, with an artisanal nature and rough manufacturing. On the opposite side, the developed countries' food processing manufactures consider highly efficient and highly energy consuming industrial dryers (non-renewable fossil-fuelled) to be the solution for producing dried, lyophilised and dehydrated foods, such as cereals for bread, soup, baby porridges and concentrates, and so forth. In the middle way, between these two extreme positions, there is a huge lack of drying solutions, technologically developed, related to low energy consumption, eco-friendly and environmentally concerned, fed by renewable energies and which, simultaneously, are able to meet food's high quality standards, required by the market. In this category, small and medium-sized farms are included, oftentimes likely to have a certification for organic food, run mainly by college-graduated entrepreneurs, with a generational and renewed agricultural developed countries mindset, into which Portugal and the EU are inserted.

### Description of the Invention

The invention is defined by a method according to claim 1 and a hybrid solar dryer according to claim 3. invention thus refers to a method for automation of the operation mode of a hybrid solar dryer, through an averaging algorithm based on the reading and processing of physical data -the temperature reading of physical data and relative humidity, inside and outside of the drying chamber- which permits the optimisation of the use of solar energy to the detriment of another non-renewable energy source. It therefore allows the drying process to be energy-efficient as it reduces drying costs and CO2 emissions, and increases the drying quality of the plant material and respective hybrid solar dryer, which implements the corresponding method.
The present invention, thanks to the verified thermal differential between external and internal air, enables to control the opening and closing of registers for air entrance, coming from solar collectors and the activation of the dryer's remaining devices, in order to provide, continuously, optimum air temperature and humidity conditions in the drying chamber, regardless of the absence of solar radiation at night or of its diminution, in case of adverse weather conditions. It contributes to the development of food preservation and drying techniques, namely for medicinal and aromatic plants, fruits and mushrooms.
The present invention, as a method and with its corresponding device implementation, thus comprises a physical module which consists of a system allowing for the method to be implemented - hybrid solar dryer; and a software module - the averaging algorithm - which consists of the operational method of a hybrid solar dryer for plants.

The hybrid solar dryer which implements a preferred embodiment of the present invention consists of an outer structure, formed by the combination of one or more base module units, whose unit dimensions are 6.21m (length), 2.44 m (width), height of 2.61m and a usable inner volume of 32.83m3. The base module consists of a metallic structure covered with isothermal panels, made of a rigid polyurethane foam injected between two corrugated sheets. This coating gives the drying chamber a thermal insulation: it maintains the accumulated temperature during the day for long time periods and insulates the interior from the night's lower temperatures. The base module has two accesses to the interior, each on its top of the dryer: a man door and a double door for the handling of drying trays. The outer part of the base module is painted black matte (black body)
The two solar collectors receive the sun's energy and transform it into heat, which is introduced into the drying chamber: a vertical panel, mounted on the south-facing wall stretches all over its dimension and, another one, horizontal, covering the whole area of the drying's ceiling. The solar collectors are 100mm-thick air boxes, comprising at their basis the dryer's own coating material which acts as a black sheet heat-collector, and a transparent coating (cellular plastic polycarbonate plate) mounted on a metallic rail. It is this feature of the coating - the transparency to visible radiation and opacity to infrared radiation- that enables the entrance of solar radiation into the box and the heating of the air inside: the collecting plate absorbs radiation and, immediately afterwards, emits the radiation as heat which is impeded from exiting the collector, trapped by the polycarbonate plate.

The greenhouse effect produced by the process of absorption/emission of solar energy into the collector results from the successive rising temperature of the collector plate, which is simultaneously the dryer's own coating. This technical energy accumulated on the collector plate and in the air present into the collector is the one which remains available to enter into the drying chamber, be it by direct transfer (contact), in the first case, or by intake duct, in the second case.

The different position of collectors (one vertical; the other, horizontal) enable the hot air flow which enters the drying chamber to come, alternatingly, from the lateral solar collector or from the one on the ceiling, depending on the sun's height and inclination and the resulting thermal energy stored in each one. The total surface of solar collectors (28m2) for each base module: Wall panel 6.21m x 2.10m; ceiling panel 6.21m x 2.44m.
The process of air intake and air exhaust in the drying chamber happens through a system for air intake and extraction, consisting of ventilation ducts, equipped at its extremity with airflow registers and centrifugal axial fans in thermoplastic resin, equipped with electronic control engines ensuring a particularly elevated energy efficiency and warranting a forced convection of the air inside the drying chamber (airflow 990m3/h (275 l/s) and power 110w).
The dryer is equipped with high-precision and stability sensors for measuring air temperature and the relative humidity in the solar collectors (external air) and inside the drying chamber (internal air), incorporated in transmitters that convert measured values into output signals for the communication interface and software. The reading of these physical data is done continuously and incorporated into the averaging algorithm. A preferred embodiment of this invention also includes:
- Supplementary heating - a 1500w heat resistance blower;
- Air circulation blower -200w helical fan;
- Dehumidifier condenser with an extraction capacity 701 water/day and a 1500m3/hour airflow;
- Drying trays - removable and stackable trays with a stainless metallic structure and a plastic base, allowing the heated air to circulate through the product to be dried.

In short, the hybrid solar dryer, object of the present invention, comprises:
- A programming module;
- sensors to measure temperature and air relative humidity;
- ventilation ducts and dehumidifying systems, supplementary heating and air circulation;
- a programming module hardware-based and controlled by a micro-ship processor able to implement the algorithm, with a connection to an Ethernet port, and an assigned IP address, a control framework with a circuit-breaker and a signal control for current and the possibility of connecting to an UPS source;
- drying chamber, inside which drying trays are set, characterised by a black-coloured module, coated with isothermal panels made of a rigid polyurethane foam injected between two corrugated sheets;
- Two solar collectors - a vertical panel, on the south-facing wall with the total dimensions of the wall, and another one, horizontal, with the exact dimensions of the drying's ceiling, characterised by heat-collector black air boxes, covered by transparent coating plates (cellular plastic polycarbonate plate) mounted on a metallic rail;
- high-precision and stability sensors for measuring temperature and air relative humidity in the solar collectors and inside the drying chamber (internal air), incorporated in transmitters able to convert measured values into output signals for the communication interface and software, by introducing them in the averaging algorithm;
- ventilation ducts for hot air intake into the drying chamber coming from the solar collectors and exhaustion of humid air from the drying chambers, with airflow registers mounted on their respective extremities, coupled with electronic control engines for extraction;
- Dehumidifier condenser, heat resistance blower and fan.

The averaging algorithm, that is the computing module which forms the drying programme, guarantees the automation of the hybrid solar dryer, aforementioned, and that is what sets it apart from all others existing dryers. It allows for ling the temperature and (air) relative humidity inside the drying chambers, through the reading and processing of all the data supplied by the respective collectors' sensors (external air) and from the drying chamber (internal air). Data is continuously transmitted to the averaging algorithm which, in accordance with parameters, initially defined as optimum for a quality drying, controls the opening of the flow registers of the intake/exhaust ducts, and activates the respective engines, causing air to enter and exit so to create (and restore) optimum drying conditions. When external conditions (in the collectors) are unfavourable, the algorithm results in closing the intake registers, in the deactivation of engines, and in the activation of the dehumidifying sets and of supplementary heating.

This newly invented method provides for physical data processing according to three (3) types of drying:
- Thermal differential drying;
- Dehumidification drying;
- Forced convection drying with supplementary heating.

As seen above, a quality drying requires the control of essential parameters, such as the thermal energy supplied which heats up the product and causes the migration of water to the surface and its posterior transformation into vapour; the capacity of the ambient air to absorb the vapour released from the product, due to its relative humidity and temperature; and the drying air velocity, responsible for removing the water vapour from the surface of the product.

Whenever the external air is qualified for drying, that is, whenever external air temperature (in solar collectors, T1 or T2) is superior to air temperature inside the drying chamber (Ti) - the algorithm results in the order to open the registers, allowing for hot air to enter the intake duct; in view of the data reading of the two collectors' sensors, the algorithm chooses air coming from the solar collector, which offers better conditions in what concerns relative humidity. To that end, the collector's intake register, with the best conditions of humidity (H) and temperature (T), and the register for exhaustion of the drying chambers are opened, as well as the engines of the respective ducts for intake and exhaustion.

This situation carries on as such for the most part of the day, even when the solar radiation diminishes due to cloudiness, because solar collectors are not only able to receive the radiating energy but are also, and mostly, able to transform it into thermal energy, retaining and storing it for long periods of time, beyond the hours of sunlight.

When the temperature of the external air in both collectors (T1 and T2) does not meet the conditions required for a good drying, that is, when it drops to values inferior to those of the temperature inside the drying chamber (Ti), the algorithm orders to close registers, intake and exhaustion engines, and switches the dehumidifier on.

During the time period in which drying operates only through dehumidification with air registers closed, the temperature inside the drying chamber naturally increases, due to the heat produced by the use of the dehumidifier.

This dehumidification process will be interrupted whenever the temperature inside the drying chamber is superior to the one allowed by the dehumidifier to perform this task. (TmaxDES); This maximum temperature, tolerable for the use of the dehumidifier, depends on the device contrast capacity and is defined in the algorithm (or parametrised by the user).

At this point, air recycling, inside the chamber, will be conducted in order to:
- Change the temperature inside the chamber to favourable levels, suitable for an efficient operability of the dehumidifier;
- To lower relative humidity inside the chamber, not only through the exit for humid air (dragging vector for the drying humidity), but also through the intake of colder air which, when heating up, will expand thus reducing relative humidity.

When the internal temperature inside the drying chamber falls to values below the minimum temperature (Tmin) defined by the algorithm for drying (or parametrised by the user), the heater is activated, assisted by the fan, for air circulation.

Once the favourable conditions for a good drying are restored, H and T for the external air in the collectors, the cycle will reinitiate with the opening of the registers for hot air.

Data processing by the averaging algorithm may be implemented on any hardware support, with memories requirements, processing capacity, inputs and outputs and necessary communications. As a result of the highest supplementary energy consumption occurring predominantly when radiation is non-existent, that is overnight, the invented method provides the opportunity to adopt a bi-hourly tariff, so to take advantage of the changes in electricity prices all day through, thus using it when it thrives on the grid, hence cheaper, and allowing for a significant cost reduction in energy costs.

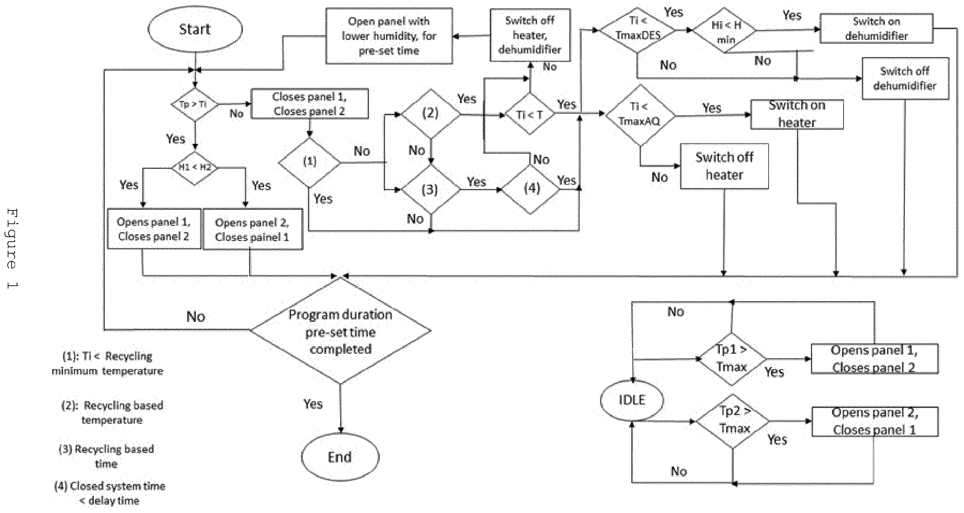

A preferred embodiment of the present invention provides for the user's interaction in the drying process, in three (3) aspects: monitoring, parametrisation and *ad hoc* instructions, *in loco* online (internet) and *via* smartphone.
Monitoring this invention is possible through a real-time access to the drying registers on temperature, relative humidity and functioning devices (extractors, heat blower, etc.). The user also has access to the history of registers and is given the possibility to trace graphs of the evolution of the drying process and the statistical processing of data.
Parametrising takes place according to data consulted and acquired experience. The user may calibrate the initial parameters of the averaging algorithm thus adjusting the drying process. The user may activate or deactivate a few devices and change defined parameters. In addition, the present invention:
- gives the user an optional possibility to interact with the drying process through parametrisation, monitoring or *ad hoc* instructions, either *in loco* or online or *via* a smartphone.
- allows the user to define the initial parameters for drying or a one-off change, as a result of his/her experience or under exceptional circumstances, by incorporating them in the averaging algorithm and/or activating or deactivating devices;
- allows the user to monitor the drying process with real-time knowledge of the operating devices and of data concerning temperature and relative humidity in the solar collectors and inside the drying chamber; The user also has access to the history of drying data and their statistical treatment, with the drawing of a drying curve;
- serves to dry food, such as, but not ruling out, aromatic and medicinal plants, fruits and mushrooms.

## Claims

1. Method for the automation of the operation mode of a hybrid solar dryer for plants, controlled by an averaging algorithm, comprising the following steps:
a) Reading the temperature and relative humidity of air, inside and outside the drying chamber;
b) opening and closure of air intake and exhaust registers; activation of the dehumidifier and hot blower and of the other devices of the dryer;
c) activation of the opening of air intake registers coming from the solar collectors when air temperature within the solar collectors (Tp) is superior to the temperature inside the drying chamber (Ti) ;
d) comparison of air relative humidity in the solar collectors;
e) activation of the closure of the register panel with a higher relative humidity and keeping the panel with a lower air relative humidity opened;
f) closure of air intake registers of the solar collectors and activation of the dehumidifier when air temperature in the solar collectors (Tp) is inferior to the temperature inside the drying chamber (Ti);
g) activation of the heat-blower when the temperature inside the drying chamber (Ti) is inferior to the minimum temperature defined for drying;
h) activation of the opening of air intake and exhaust registers when air temperature inside the drying chamber (Ti) is superior to the maximum temperature admitted for the operability of the dehumidifier and initially defined in the averaging algorithm (TmaxAQ).

2. Method according to claim 1 wherein when the drying chamber is empty, operates an air-recycling when air temperature in the solar collectors is equal or superior to 70°C.

3. Hybrid solar dryer which implements the method in claims 1 and 2, **characterized by** it comprises:
a) a programming module;
b) ventilation ducts and dehumidifying systems, supplementary heating and air circulation;
c) a programming module consisting of hardware, controlled by a micro-ship processor, with a connection to an Ethernet port, and an assigned IP address, a control framework with a circuit-breaker and a signal control for current and an UPS source;
d) drying chamber, inside which drying trays are set, **characterised by** a black-coloured module, coated with isothermal panels made of a rigid polyurethane foam injected between two corrugated sheets;
e) a vertical solar collector, on the south-facing wall and with the total dimensions of the wall, and solar collector for ceiling, horizontal, with the exact dimensions of the drying's ceiling;
f) high-precision and stability sensors for measuring temperature and air relative humidity in the solar collectors and inside the drying chamber (internal air), incorporated in micro-shipped transmitters;
g) ventilation ducts for hot air intake into the drying chamber coming from the solar collectors and exhaustion of humid air from the drying chambers, mounted on their respective extremities, coupled with electronic control engines for extraction;
h) dehumidifier condenser, heat resistance blower and fan.

4. Dryer according to the previous claim wherein it comprises a base module consisting of a metallic structure coated with panels made of a rigid polyurethane foam injected between two corrugated sheets and two accesses on top of the dryer.

5. Dryer according to the previous claim wherein it comprises solar collectors being 100mm-thick air boxes, comprising at their basis, the base module coating material and by a transparent coating mounted on a metallic rail.

6. Dryer according to the previous claim wherein the transparent coating being a cellular plastic polycarbonate plate.

## Patentansprüche

1. Verfahren für die Automatisierung der Betriebsweise eines hybriden Solartrockners für Pflanzen, das durch einen Mittelungsalgorithmus gesteuert wird, welches folgende Schritte umfasst:
a) Messung der Temperatur und der relativen Luftfeuchtigkeit, innerhalb und außerhalb der Trockenkammer;
b) Öffnung und Schließung des Lufteinlass - und Auslassventils; Aktivierung des Luftentfeuchters und des Heißlüfters und der anderen Geräte des Trockners;
c) Aktivierung der Öffnung des Lufteinlassventils, wodurch Luft von den Solarkollektoren kommt, wenn die Lufttemperatur (Tp) in den Solarkollektoren höher ist, als die Temperatur (Ti) im Inneren der Trockenkammer;
d) Vergleich der relativen Luftfeuchtigkeit in den Solarkollektoren;
e) Aktivierung der Schließung des Ventilpanels mit der höheren relativen Feuchtigkeit und Offenhaltung des Panels mit der niedrigeren relativen Feuchtigkeit;
f) Schließung des Lufteinlassventils der Solarkollektoren und Aktivierung des Luftentfeuchters, wenn die Lufttemperatur (Tp) in den Solarkollektoren niedriger ist, als die Temperatur (Ti) im Inneren der Trockenkammer;
g) Aktivierung des Heizungsgebläse, wenn die Temperatur (Ti) im inneren der Trockenkammer niedriger ist, als die bestimmte Mindesttemperatur zum Trocknen;
h) Aktivierung der Öffnung der Lufteinlass - und Auslassventils, wenn die Lufttemperatur (Ti) im Inneren der Trockenkammer höher ist, als die Höchsttemperatur, die für die Funktionsfähigkeit des Entfeuchters zugelassen ist und die ursprünglich in dem Mittelungsalgorithmus (TmaxAQ) festgelegt wurde.

2. Verfahren nach Anspruch 1, worin, wenn die Trockenkammer freisteht, ein Luft-Recycling betrieben wird, wenn die Lufttemperatur in den Solarkollektoren gleich oder höher als 70° C ist.

3. Hybrider Solartrockner, welcher das Verfahren in den Ansprüchen 1 und 2 umsetzt, **dadurch gekennzeichnet, dass** es folgendes umfasst:
a) ein Programmierungsmodul;
b) Belüftungskanäle und Luftentfeuchtungssysteme, Zusatzaufheizung und Luftzirkulation;
c) ein Programmierungsmodul, das aus einem Hardware besteht und von einem Microchip-Prozessor gesteuert wird, mit einer Verbindung zu einem Ethernetanschluss, und mit einer zugeordneten IP-Adresse, mit einem Kontrollrahmen mit einem Leistungsschalter und einer Stromsignalsteuerung und einer UPS-Quelle;
d) Trockenkammer, im Inneren mit Trockenbleche, **gekennzeichnet durch** ein schwarz gefärbtes Modul, welches mit isothermischen Platten, die aus Polyurethan-Hartschaum bestehen, welcher zwischen zwei Wellplatten injiziert wird, beschichtet ist;
e) ein senkrechter Solarkollektor, an der Südwand und mit der Gesamtabmessung der Wand und Solarkollektoren für die Decke, horizontal, mit den genauen Abmessungen der Decke des Trockners;
f) Hochpräzision und - Stabilitätssensoren für die Messung der Temperatur und der relativen Luftfeuchtigkeit in den Solarkollektoren und im Inneren der Trockenkammer (Innenluft), diese sind in Mikrosendern eingebaut;
g) Belüftungskanäle für den Einlass von Heißluft in die Trockenkammer, welche aus den Solarkollektoren kommen und Auslass von feuchter Luft aus der Trockenkammer, die an dessen jeweiligen Enden montiert sind, die an elektronisch gesteuerte Motoren für Extraktion gekoppelt sind;
h)Luftentfeuchtungskondensator, Widerstandsheizungsgebläse und Lüfter.

4. Trockner nach dem vorhergehenden Anspruch, worin dieser ein Grundmodul, welches aus einer Metallstruktur, die aus Platten von Polyurethan-Hartschaum bestehet, welcher zwischen zwei Wellplatten injiziert wurde und zwei Zugänge am Oberteil des Trockners umfasst.

5. Trockner nach dem vorhergehenden Anspruch, worin dieser Solarkollektoren aus Luftkässeln mit einer Dichte von 100mm besteht, welche an deren Basis das Beschichtungsmaterial des Grundmoduls umfassen und ducrh eine transparente Beschichtung an einem metallischen Schiene montiert sind.

6. Trockner nach dem vorhergehenden Anspruch, worin die transparente Beschichtung eine zelluläre Polycarbonat-Kunststoffplatte ist.

## Revendications

1. Méthode d'automatisation du mode de fonctionnement d'un séchoir solaire hybride pour plantes, contrôlé par un algorithme de calcul de moyenne, comprenant les étapes suivantes :
a) lecture de la température et de l'humidité relative de l'air, à l'intérieur et à l'extérieur de la chambre de séchage ;
b) ouverture et fermeture des registres d'entrée et d'extraction d'air ; activation du déshumidificateur et de la soufflante d'air chaud et des autres dispositifs du séchoir ;
c) activation de l'ouverture des registres d'entrée d'air provenant des collecteurs solaires lorsque la température de l'air dans les collecteurs solaires (Tp) est supérieure à la température à l'intérieur de la chambre de séchage (Ti) ;
d) comparaison de l'humidité relative de l'air dans les collecteurs solaires ;
e) activation de la fermeture du registre du panneau avec une humidité relative plus élevée, en maintenant ouvert le panneau avec une humidité relative de l'air plus basse ;
f) fermeture des registres d'entrée d'air provenant des collecteurs solaires et activation du déshumidificateur lorsque la température de l'air dans les collecteurs solaires (Tp) est inférieure à la température à l'intérieur de la chambre de séchage (Ti) ;
g) activation de la soufflante d'air chaud lorsque la température à l'intérieur de la chambre de séchage (Ti) est inférieure à la température minimale définie pour le séchage ;
h) activation de l'ouverture des registres d'entrée et d'extraction d'air lorsque la température de l'air dans la chambre de séchage (Tp) est supérieure à la température maximale admise pour le fontionnement du déshumidificateur et initialement définie dans l'algorithme de calcul de moyenne (TmaxAQ).

2. Méthode selon la revendication 1 où, lorsque la chambre de séchage est vide, un recyclage d'air opère quand la température de l'air dans les collecteurs solaires est égale ou supérieure à 70°C.

3. Séchoir solaire hybride qui met en oeuvre la méthode des revendications 1 et 2, **caractérisé en ce qu'**il comprend :
a) un module de programmation ;
b) des conduits de ventilation et systèmes de déshumidification, chauffage supplémentaire et circulation d'air ;
c) un module de programmation constitué de hardware, contrôlé par un processeur à micropuce, avec une liaison à un port Ethernet et une adresse IP assignée, un cadre de contrôle avec un disjoncteur et un contrôleur de signal de courant et une source UPS ;
d) une chambre de séchage, à l'intérieur de laquelle sont disposés des plateaux de séchage, **caractérisée par** un module de couleur noire, revêtu de panneaux isothermiques en mousse rigide de polyuréthane injectée entre deux tôles ondulées ;
e) un collecteur solaire vertical sur la paroi orientée au sud et avec les dimensions totales de la paroi, et un collecteur solaire horizontal de plafond avec les dimensions exactes du plafond du séchoir ;
f) capteurs de haute precision et stabilité pour mesurer la température et l'humidité relative de l'air dans les collecteurs solaires et dans la chambre de séchage (air intérieur), incorporés dans des transmetteurs à micropuce ;
g) des conduits de ventilation pour l'entrée dans la chambre de séchage de l'air chaud provenant des collecteurs solaires et l'extraction de l'air humide de la chambre de séchage, montés sur leurs extrémités respectives et couplés à des moteurs d'extraction à commande électrique ;
h) un déshumidificateur par condensation, une soufflante d'air chaud et un ventilateur.

4. Séchoir selon la revendication précédente qui comprend un module de base composé d'une structure métallique revêtue de panneaux en mousse rigide de polyuréthane injectée entre deux tôles ondulées et deux accès sur le haut du séchoir.

5. Séchoir selon la revendication précédente qui comprend des collecteurs solaires étant des lames d'air d'une épaisseur de 100 mm, constituées à leur base du matériau de revêtement du module de base et d'une couverture transparente montée sur un rail métallique.

6. Séchoir selon la revendication précédente où la couverture transparente est une plaque de polycarbonate en plastique cellulaire.
